# EUROPÄISCHE PATENTSCHRIFT

(11) **EP 1 815 717 B1**
(45) Veröffentlichungstag und Bekanntmachung des Hinweises auf die Patenterteilung: **28.05.2008**
(21) Anmeldenummer: 05825172.9
(22) Anmeldetag: 23.11.2005
(51) Int. Cl.: H05B 3/34, B60N 2/56

(54) **Verfahren zum Herstellen eines textilen Flächenheizelementes**
Method for the production of a textile surface-heating element
Procédé de fabrication d'un élément textile de chauffage de surface

(30) Priorität: 24.11.2004 DE 102004056737
(43) Veröffentlichungstag der Anmeldung: 08.08.2007
(73) Patentinhaber: Kufner Textil GmbH, 81379 München (DE)
(72) Erfinder: VOIGT, Andreas, 81735 München (DE); KLEMM, Brigitte, 09247 Chemnitz (DE)
(74) Vertreter: HOFFMANN EITLE
(86) Internationale Anmeldenummer: PCT/EP2005/012525
(87) Internationale Veröffentlichungsnummer: WO 2006/056414

(56) Entgegenhaltungen:
- EP-A- 0 532 468
- GB-A- 840 243
- US-A- 2 392 470
- US-A- 5 484 983
- US-A1- 2001 027 973

## Beschreibung

### Technisches Gebiet

Die Erfindung bezieht sich auf ein Verfahren zum Herstellen eines textilen Flächenheizelementes, wie sie insbesondere für Sitzheizungen im Kfz-Bereich zur Anwendung kommen. Allerdings besteht auch die Möglichkeit des Einsatzes bei Fußbodenbelägen, Bettdecken, heizbare Kleidung oder deren Teile und dergleichen.

Textile elektrische Flächen dienen der Temperierung von Umgebungen, welche mit dem menschlichen Körper in Kontakt sind. Dabei sind diese meist mit anderen textilen Lagen durch Vernähen oder Verkleben zusammen gefügt. In anderen Fällen werden aus entsprechenden Heizleitern Flächen gebildet, welche aus Heizleitern und deren Zuleitungen bestehen. Form und Größe werden dabei den jeweiligen Anwendungsverhältnissen angepasst. Da die Form und Größe recht unterschiedlich sein kann, sind heutzutage recht aufwendige Technologien üblich, welche einen hohen Fertigungszeitaufwand darstellen und viele Teiloperationen beinhalten.

### Stand der Technik

Durch die DE 41 36 425 A1 ist ein Flächenheizelement und ein Verfahren zu dessen Herstellung bekannt, welches Flächenheizelement aus im wesentlichen parallel angeordneten Heizdrähten besteht, die an ihren Enden und/oder Umlenkstellen mit Stromzuführungsleitern elektrisch verbunden sind und die in ein textiles Grundmaterial eingebettet sind. Die Heizleiter verlaufen als Schussfaden sinusförmig über Maschenfäden eines gewirkten Grundmaterials und sind zumindest an den Maxima der Amplituden in die Maschen des textilen Grundmaterials eingebunden, wobei die Stromzuführungsleiter als Kontaktleiste an den sich gegenüberliegenden Raportkanten rechtwinklig zur Sinusachse angeordnet sind und jeder Heizleiter mit jedem Kontaktleiter elektrisch leitend verbunden ist.

Des Weiteren ist aus der DE 101 12 405 A1 ein Flächenheizelement, insbesondere für Sitzheizungen im Kfz-Bereich, bekannt. Die Heizleiter sind innerhalb von mittels der Kontaktleiter begrenzten Heizfeldern derart in Richtung der Maschenstäbchen und orthogonal zu den Maschenstäbchen wirkend eingelegt, dass mindestens als ein Hauptheizfeld und mindestens als ein Nebenheizfeld fungierende zwei Zonen unterschiedlicher Heizleistung vorhanden sind.

Die Kontaktleiter werden vor dem Wirkprozess auf ein textiles Grundmaterial mittels Kleben oder Nähen aufgebracht, und werden somit in einem separaten Arbeitsprozess hergestellt. Die Herstellung der Kontaktleiter erfolgt also werktechnisch in einer Vorstufe. Die Anzahl der möglichen Metallfäden ist von der Nadelteilung einer entsprechenden Maschine abhängig und bestimmt somit die Breite der Kontaktleiterbänder.

Aus der DE 41 42 774 A1 ist ein Flächenheizelement und ein Verfahren zu seiner Herstellung bekannt, bei dem in einem Arbeitsgang ein Grundgewirke und als Schussfäden Heizleiter und Stromzuführungsleiter eingewirkt werden.

### Darstellung der Erfindung

Es ist das technische Problem (Aufgabe) der Erfindung, ein textiles Flächenheizelement der eingangs genannten Art zu schaffen, welches einfacher und preiswerter herstellbar ist.

Diese Aufgabe wird erfindungsgemäß durch ein Verfahren gemäß Anspruch 1 gelöst. In erster Linie erfolgt die Herstellung des textilen Flächenelementes durch Wirken.

Die erfindungsgemäße Lösung stellt gegenüber dem Stand der Technik einen möglichst hohen Automatisierungsgrad dar. Das dabei produzierte textile Flächengebilde hat einen hohen Homogenisierungsgrad bezüglich der Einarbeitung der Einzelkomponenten Gewirke, Vlies, Heizleiter und Kontaktleiter. Dies vereinfacht die Herstellung der Flächenheizelemente und trägt zu einer Kosteneinsparung bei, da insbesondere die Kontaktleiter nicht in einem eigenen Arbeitsgang hergestellt und auch das Vlies nicht getrennt appliziert werden müssen. Dies gilt insbesondere bei hohen Stückzahlen.

Zweckmäßigerweise können die Heizleiter zumindest zum Teil elektrisch leitende Kettfäden eines Gewebes oder Gewirkes und die Kontaktleiter im Abstand zueinander gelegte Schussfäden sein. Es können allerdings auch in einem Arbeitsgang auf ein Grundvlies aus sogenanntem non-woven Material die Heizleiter als Kettgewirke und zugleich damit die Kontaktleiter quer dazu als Schussfäden eingewirkt sein.

Dabei können die Kontaktleiter im Abstand zueinander als Einzelfäden oder als Fadengruppen vorhanden sein.

Verfahrenstechnisch kann die Spannung der Kontaktleiterfäden über eine Regeleinrichtung am Gatter für die Zuführung der Schussfäden eingestellt werden, wodurch bestimmte Elastizitätsmerkmale im Flächenheizelement beinflussbar sind.

Es besteht auch die Möglichkeit, die Anzahl der zugeführten Kontaktleiterfäden durch variierbaren Einzug in ein Schusseintragsystem von 1 bis 30 Fäden zu bestimmen. Dabei kann die Schusseintragsvorrichtung über einen Computer gesteuert und über diesen ab- und zugeschaltet werden. Dadurch ist die Größe eines Flächenheizelementes in der Länge, welches durch die quer in Gewirke befindlichen Kontaktfäden definiert ist, programmierbar und somit nahezu unbegrenzt während des Wirkprozesses bestimmbar. Eine Sensorik zur Erfassung und Wegmessung wird dadurch überflüssig. Dadurch steigt die Flexibilität zur Herstellung von möglichen Produktvarianten und kann über die Maschine selbst gesteuert werden, was den Dispositionsaufwand und die Lagerhaltung vereinbart.

Über den Zentralcomputer ist es weiterhin möglich, die Maschendichte (Maschen pro cm) während eines Wirkprozesses zu verändern. Dies hat zur Folge, dass in diesem frei wählbaren Bereich der veränderten Maschendichte ebenfalls die Anzahl der metallischen Schussfäden steigt, wodurch auf engstem Raum eine maximale Anzahl von Kontaktfäden mit den Heizleitern elektrische Kontaktstellen bildet. Damit ist ein hohes Maß an elektrischer Kontaktsicherheit erreichbar. Vorteilhafterweise wird die Maschine dabei so programmiert, dass während der Einarbeitung der quer liegenden Kontaktfäden ebenfalls die Maschendichte reduziert wird, wodurch ein kompakter Kontaktleiterbereich aus einer hohen Anzahl von elektrischen Verbindungspunkten auf geringer Breite erzielbar wird.

Ein weiterer Vorteil der Möglichkeit der über den Computer wählbaren Maschendichte besteht darin, dass sich damit der Anteil an Fadenmaterial bezogen auf eine wirksame Heizfläche variieren lässt, da die Heizfäden in die Maschen der Grundbindung, meist Fransenbindung, eingearbeitet sind. Dadurch ergeben sich Flächen mit unterschiedlicher Heizleistung, welche neben einem veränderten Legungsbildes der Heizleiter auch aus einer größeren Einarbeitung von Heizmaterial durch Maschenzahlerhöhung resultiert.

### Kurze Beschreibung der Zeichnungen

Fig. 1 zeigt eine Draufsicht auf einen Abschnitt eines textilen Flächenheizelementes.

Fig. 2 zeigt einen vergrößerten Ausschnitt der Draufsicht gemäß Fig. 1

Fig. 3 zeigt eine Schnittdarstellung entlang der Linie A-A in Fig. 2.

### Beschreibung eines Ausführungsbeispiels der Erfindung anhand der Zeichnungen

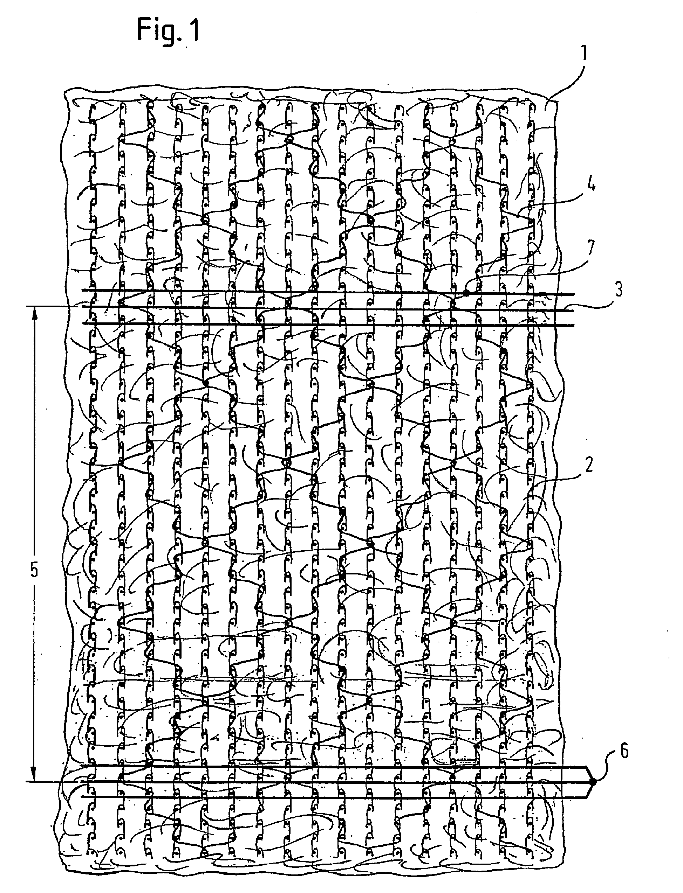

Das in Fig.1 dargestellte Flächenheizelement weist ein Grundmaterial 1 in Form eines Vlies auf. Dies ist ein sogenanntes non-woven Material, obwohl auch Gewirke, Gewebe oder Folien zum Einsatz kommen können. Dieses Grundmaterial 1 wird der an sich bekannten Wirkmaschine mit Durchstichtechnik vorgelegt. Mit 2 sind die die Wirkbindung bildenden Maschen bezeichnet, welche Wirkbindung das Vlies durchsticht. Das Fadenmaterial ist dabei elektrisch nicht leitend. Kontaktleiter 3 sind wirktechnisch als Schuss verarbeitet. Sie bestehen aus einem metallischen, elektrisch leitenden Material, meist Metalldraht. Die Anzahl kann von 1 bis 30 schwanken und richtet sich auch nach der technischen Konstruktion der Wirkmaschine. Als Kettfäden sind Heizleiter 4 eingearbeitet, die aus textilem, leitfähigen Material, meist Carbon, bestehen. Dies sind die eigentlichen Heizfäden, welche über die Kontaktleiter 3 mit Strom versorgt werden.

Das Bezugszeichen 5 bezeichnet die Länge des Heizfeldes, definiert durch den Abstand der leitfähigen Kontaktleiter 3. Der Abstand ist an der Maschine frei wählbar und wird dem Maschinenprogramm hinterlegt. Beim Bezugszeichen 6 zeigt sich, wie die Enden der Kontaktleiterfäden zusammengeführt werden und als Stromzuleitung für das Heizelement dienen.

Das gesamte Flächenheizelement wird in einem Vorgang gewirkt zusammen mit dem Grundmaterial, sofern ein solches überhaupt verwendet wird, was nicht unbedingt notwendig ist.

Wie der Zeichnung entnommen werden kann, kommt es zu einer definierten Kreuzung 7 zwischen dem Kontaktleiter 3 und den Heizleitern 4. Durch die Fransenmasche 2 werden die Kontaktleiter 3 und die Heizleiter 4 mit dem Grundmaterial 1 verbunden und lagegesichert. In dem Bereich der Kontaktleiter 3 befindet sich in jeder Fransenmasche ein Kontaktleiterfaden 4 und führt dort zu einer Kreuzung mit dem Heizleiter, was zu einer sicheren und optimalen Stromversorgung führt.

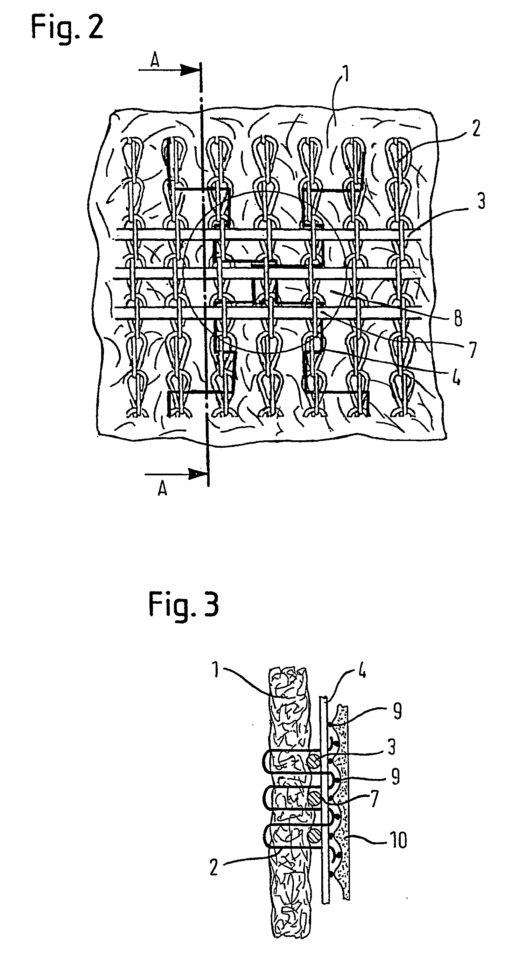

Der Gesamtaufbau ist deutlich der Darstellung in Fig. 2 und Fig. 3 zu entnehmen. In Fig. 2 bezeichnet das Bezugszeichen 8 als Einzelheit die definierte Verbindung zwischen maschenbildenden Fäden 2, Kontaktleitern 3 und Carbonfäden als Heizleiter 4. Zwischen den Heizleitern 4 und dem Kontaktleiter 3 kommt es dabei zu einer Verkreuzung 7 und beide werden durch die Fransenmasche 2 mit dem Grundmaterial 1 verbunden. In Fig. 3 wird diese Einzelheit im Schnitt dargestellt.

Insbesondere wenn das Flächenheizelement eine Einheit dahingehend darstellen und diese Einheit als textile, beheizbare Einlage nicht nur in Sitzen von Kraftfahrzeugen, sondern anderweitig verwendet werden soll, so besteht auch die Möglichkeit, beispielsweise bei dem in den Zeichnungen dargestellten Flächenheizelement (siehe insbesondere Fig. 3) auf der dem Vlies 1 entgegengesetzten Seite auf den Verbund aus Heizleitern 4 und Kontaktleitern 3 eine textile Lage 10 zu kaschieren. Es kann aber auch das Flächenheizelement so vorgesehen sein, dass auf den Verbund aus Heizleitern mit Kontaktleitern nur eine Klebe- und insbesondere eine Schmelzkleberbeschichtung aufgebracht ist, so dass nach Belieben zu einem späteren Zeitpunkt eventuell am anderen Ort eine Applikation erfolgen kann, wozu der Schmelzkleber thermoaktiviert wird. In Fig. 3 erfolgt dies durch einen Schmelzkleber 9, der in dieser Darstellung punktrasterförmig aufgebracht ist. Dieser Schmelzkleber ist thermoaktivierbar, sodass Schmelzkleber und Textillage nicht zum zugleich aufgebracht werden müssen. Eine solche Einlage kann vielseitig verwendet werden, um textile Bereiche unterschiedlichster Art zu beheizen.

Durch die Kaschierung besteht ein weiterer Vorteil dahingehend, dass durch den Schmelzkleber, insbesondere wenn er flächendeckend aufgebracht wird, der Verbund aus Heizleitern und Kontaktleitern besser lagegesichert ist. Außerdem entsteht dadurch gegebenenfalls ein Wetterschutz und auch eine elektrische Isolierung.

Es bedarf keiner Beschreibung der Wirkmaschine, mit der das in Fig. 1 dargestellte Flächenheizelement hergestellt werden kann, da derartige Wirkmaschinen dem Fachmann bekannt und auf dem Markt verfügbar sind.

## Patentansprüche

1. Verfahren zum Herstellen eines textilen Flächenheizelementes, insbesondere für Sitzheizungen im Kfz-Bereich, durch Wirken ein Grundmaterial als non-woven Material, beispielsweise Vlies als so genanntes non-woven Material mit einem dieses durchstechenden Gewirke in ein- und demselben Arbeitsgang durch Wirken zumindest teilweise als Kettfäden Heizleiter gelegt und in Abständen zueinander als Schussfäden oder Schussfadengruppen die Heizleiter berührende Kontaktleiter eingetragen werden, so dass die Heizleiter und Kontaktleiter integraler Bestandteil des Grundmaterials sind.

2. Verfahren nach Anspruch 1, **dadurch gekennzeichnet, dass** die Spannung der Kontaktleiterfäden über eine Regeleinrichtung am Gatter für die Zuführung der Schussfäden eingestellt wird.

3. Verfahren nach Anspruch 1 und/oder 2, **dadurch gekennzeichnet, dass** die Anzahl der zugeführten Kontaktleiterfäden durch variierbaren Einzug in ein Schusseintragssystem von beispielsweise 1 bis 30 Fäden bestimmt wird.

4. Verfahren nach Anspruch 3, **dadurch gekennzeichnet, dass** die Schusseintragsvorrichtung über einen Computer gesteuert wird und über diesen ab- und zugeschaltet wird.

5. Verfahren nach Anspruch 4, **dadurch gekennzeichnet, dass** während des Wirkprozesses die Maschendichte verändert wird.

6. Verfahren nach Anspruch 1, **dadurch gekennzeichnet, dass** die Heizleiter (4) als zumindest zum Teil elektrisch leitende Kettfäden eines Gewebes oder Gewirkes und die Kontaktleiter (3) als im Abstand zueinander angeordnete Schussfäden gelegt werden.

7. Verfahren nach Anspruch 1 oder 6, **dadurch gekennzeichnet, dass** auf ein Vlies (1) als non-woven Material in einem Arbeitsgang die Heizleiter (4) als Kettfäden und zugleich damit die Kontaktleiter (3) quer dazu als Schussfäden eingewirkt sind.

8. Verfahren nach den Ansprüchen 1, 6 oder 7, **dadurch gekennzeichnet, dass** die Kontaktleiter (3) im Abstand zueinander als Einzelfäden oder in Fadengruppen gelegt werden.

9. Verfahren nach den Ansprüchen 1, 6 bis 8, **dadurch gekennzeichnet, dass** für die Verwendung des Flächenheizelementes als Einlage der Verbund aus Kontaktleitern (3) und Heizleitern (4) mit einer Textillage (10) kaschiert werden, gegebenenfalls mittels eines Schmelzklebers (9), der entweder auf den Verbund aus Heizleitern und Kontaktleitern oder auf die textile Lage aufgeschichtet wird.

## Claims

1. Process for producing a textile laminar heating element, in particular for seat heaters in the automotive field, by weaving a base material as non-woven material, for example fibrous web as so-called non-woven material, with a knitted fabric piercing the latter in one and the same working step by weaving heat conductors laid at least partly as warp threads and at distances from one another as weft threads or weft thread groups, the contact conductors touching heat conductors are introduced, so that the heat conductors and contact conductors are an integral component of the base material.

2. Process according to claim 1, **characterised in that** the tension of the contact conductor threads is adjusted via a control device at the frame for supplying the weft threads.

3. Process according to claim 1 and/or 2, **characterised in that** the number of contact conductor threads supplied is determined by variable feed into a weft introduction system of, for example 1 to 30 threads.

4. Process according to claim 3, **characterised in that** the weft introduction device is controlled via a computer and is switched off and on via the latter.

5. Process according to claim 4, **characterised in that** the mesh density is altered during the weaving process.

6. Process according to claim 1, **characterised in that** the heat conductors (4) are laid as at least partly electrically conductive warp threads of a fabric or knitted fabric and the contact conductors (3) are laid as weft threads arranged at a distance from one another.

7. Process according to claim 1 or 6, **characterised in that** the heat conductors (4) are woven as warp threads onto a fibrous web (1) as non-woven material in one working step and simultaneously therewith, the contact conductors (3) are woven in transversely thereto as weft threads.

8. Process according to claims 1, 6 or 7, **characterised in that** the contact conductors (3) are laid as individual threads or in thread groups at a distance from one another.

9. Process according to claims 1, 6 to 8, **characterised in that** for use of the laminar heating element as an insert, the composite of contact conductors (3) and heat conductors (4) is laminated with a textile layer (10), optionally by means of a hot-melt adhesive (9), which is layered either onto the composite of heat conductors and contact conductors or onto the textile layer.

## Revendications

1. Procédé de fabrication d'un élément textile de chauffage de surface, en particulier pour des chauffages de sièges dans le domaine des véhicules automobiles, par tricotage d'un matériau de base en tant que matériau non tissé, par exemple un matelas de fibres non tissé en tant que ce que l'on appelle un matériau non tissé, avec un tricot, transperçant celui-ci, où, en une seule et même passe-opératoire, par tricotage, des conducteurs de chauffage, se présentant au moins partiellement en tant que fils de chaîne, sont posés et, selon certains espacements les uns par rapport aux autres, des conducteurs de contact, se présentant en tant que fils de trame ou groupes de fils de trame, entrant en contact avec les conducteurs de chauffage sont intégrés, de manière que les conducteurs de chauffage et les conducteurs de contact fassent partie intégrante du matériau de base.

2. Procédé selon la revendication 1, **caractérisé en ce que** la tension mécanique des fils conducteurs de contact est réglée, par l'intermédiaire d'un dispositif de régulation, sur le cantre prévu pour l'amenée des fils de trame.

3. Procédé selon la revendication 1 et/ou 2, **caractérisé en ce que** le nombre des fils conducteurs de contact amenés est déterminé par l'introduction variable, dans un système d'introduction de trame, de, par exemple, 1 à 3 fils.

4. Procédé selon la revendication 3, **caractérisé en ce que** le dispositif d'introduction de trame est commandé par un ordinateur et est branché et débranché par l'intermédiaire de celui-ci.

5. Procédé selon la revendication 4, **caractérisé en ce que** la densité de maille est modifiée pendant le processus de tricotage.

6. Procédé selon la revendication 1, **caractérisé en ce que** les conducteurs de chauffage (4) sont posés en tant que fils de chaîne, au moins en partie conducteurs de l'électricité, d'un textile ou d'un tricot, et les conducteurs de contact (3) sont posés en tant que fils de trame, disposés à distance les uns des autres.

7. Procédé selon la revendication 1 ou 6, **caractérisé en ce que**, sur un matelas de fibres (1), en tant que matériau non tissé, en une passe-opératoire, on introduit par tricotage les conducteurs de chauffage (4) en tant que fils de chaîne et, en même temps que ceux-ci, les conducteurs de contact (3), transversalement par rapport à ceux-ci, en tant que fils de trame.

8. Procédé selon les revendications 1, 6 ou 7, **caractérisé en ce que** les conducteurs de contact (3) sont posés à distance les uns par rapport aux autres sous forme de fils individuels, ou en groupes de fils.

9. Procédé selon les revendications 1, 6 à 8, **caractérisé en ce que**, pour l'utilisation de l'élément de chauffage de surface, en tant qu'entoilage, le composite, formé des conducteurs de contact (3) et des conducteurs de chauffage (4), est scellé avec une couche textile (10), le cas échéant au moyen d'une colle fusible (9), qui est appliquée en couche, soit sur le composite formé des conducteurs de chauffage et des conducteurs de contact, soit sur la couche textile.
